# EUROPEAN PATENT SPECIFICATION

(11) **EP 2 892 761 B1**
(45) Date of publication and mention of the grant of the patent: **18.04.2018**
(21) Application number: 13835285.1
(22) Date of filing: 03.05.2013
(51) Int. Cl.: B60R 15/04, A47K 11/02

(54) **TOILET ARRANGEMENT IN A CAMPER OR CARAVAN**
TOILETTENANLAGE IN EINEM WOHNWAGEN ODER WOHNMOBIL
SYSTÈME DE TOILETTE DANS UN CAMPING-CAR OU UNE CARAVANE

(30) Priority: 05.09.2012 SE 1250995
(43) Date of publication of application: 15.07.2015
(73) Proprietor: Sirius Technology AS, 6475 Midsund (NO)
(72) Inventor: FRANZÉN, Dag, S-681 31 Kristinehamn (SE)
(74) Representative: Johansson, Lars E.
(86) International application number: PCT/SE2013/050498
(87) International publication number: WO 2014/038992

(56) References cited:
- EP-A2- 1 318 049
- EP-A2- 1 850 722
- AU-A4- 2010 101 297
- DE-U1- 29 503 469
- DE-U1-202009 004 485
- FR-A1- 2 521 848
- FR-A1- 2 754 504
- JP-A- 2008 110 655
- US-A- 2 734 500
- US-A- 3 599 582
- US-B1- 7 226 115

## Description

### TECHNICAL FIELD

The present invention relates to a toilet arrangement in a house trailer or a camper, which toilet arrangement comprises a module unit comprising a floor surface constituting a minor part of the total floor surface of the house trailer/camper as well as a toilet chair wall, and a toilet chair arranged on top of said floor surface and at said toilet chair wall.

### BACKGROUND

For toilet arrangements in house trailers and campers there are requirements that the special circumstances are considered which a house trailer and a camper, respectively, is subjected to. Further, there is a general interest to make a toilet arrangement as compact as possible, both from a space point of view as such and from an economic point of view, not least as to fuel economy. As the toilet arrangements are mobile, they are exposed to a number of different varying stresses and circumstances, e.g. sudden braking, slopes, bumpiness, etc. implying that very special requirements must be fulfilled by such a toilet arrangement.

Through DE 4018234 and IT 1149343, different types of toilet arrangements in house trailers and campers, respectively, are previously known, which arrangements, however, suffer from at least some essential drawback US7226115 B1 discloses a toilet arrangement in a house trailer or a camper, and a method for the provision of the same according to the preamble of claim 1 and 10.

### DISCLOSURE OF THE INVENTION

The object of the present invention is to offer a toilet arrangement implying an improvement from one, preferably many points of view in relation to today's alternatives, which is achieved with a toilet arrangement in accordance with claim 1. Thanks to a toilet arrangement according to the invention, a very compact and effective handling of evacuation may be achieved at the same time as essential hygienic aspects are solved in an effective manner. In addition, a toilet arrangement according to the invention implies an essential environmental improvement in relation to most of today's alternatives.

### BRIEF DESCRIPTION OF FIGURES RELATING TO THE INVENTION

The invention will below be described more in detail with reference to the enclosed drawings, of which:
- Fig. 1: is a perspective view from above of a conceivable, preferred embodiment of a toilet arrangement according to the invention;
- Fig. 2: shows the same arrangement as Fig. 1 but in a side view seen from behind;
- Fig. 3: shows a toilet arrangement in accordance with the basic principles which are used according to the invention;
- Fig. 4: shows the toilet of Figs. 1 and 2 in a perspective view seen from above, obliquely from behind; and
- Fig. 5: shows an alternative embodiment of a toilet arrangement according to the invention, seen obliquely from behind.

### DETAILED DESCRIPTION OF THE INVENTION

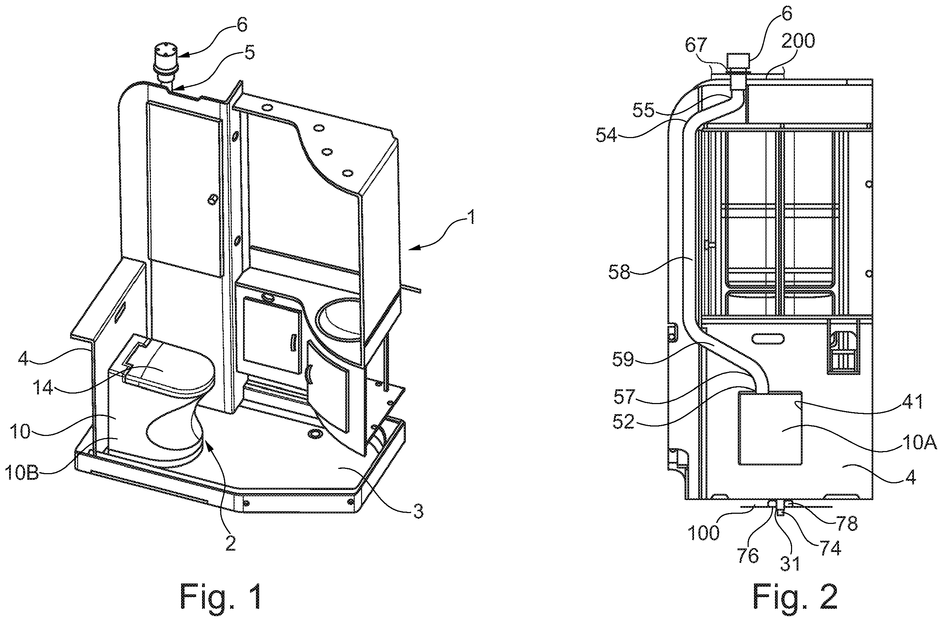

In Fig. 1 a toilet arrangement 1 is shown which is intended to be a module part of a house trailer or a camper. The toilet arrangement comprises a space with a floor 3, on top of which a toilet 2 according to the invention is arranged. The floor is provided with sealing, protruding edges, so that the floor space beside the toilet 2 also may be used for shower. Moreover, fittings are included in the toilet arrangement, such as a washbasin, etc. which will not be described more in detail, as it is considered that a great variety is possible within the scope of the invention. The toilet 2 is at its back wall arranged in contact with a wall 4 of the toilet space 1. The toilet 2 comprises an outer housing 10 and a cover 14, where the back wall of the housing 10 may be designated as a back 10B.

In Fig. 2 a view seen from behind is shown, wherein it is obvious that there is an opening having the shape of a rectangular recess 41 in the wall 4, against which the toilet 2 is arranged, through which wall 4 a box 10A belonging to the toilet 2 protrudes. An outlet 52 for flue gases is arranged, preferably at the top of this box 10A. These flue gases are fed further through an exhaust pipe 5 up to a chimney 6, which in a usual manner allows discharge of glue gases/air, but prevent entrance of wet. The chimney 6 protrudes through the roof 200 of the camper (or the house trailer) and is at the exit fastened to the roof 200 in a sealing manner, preferably through a sealing flange 67, abutting on top of the floor 200.

According to the preferred embodiment, the exhaust pipe 5 is arranged in such a way that an essential part of the section 58 which runs vertically extends in a limited space 300 in a corner region 3 of the camper/house trailer. This is achieved by the exhaust pipe 5 having a first lower part 57, 59 running obliquely upwards in the lateral direction from a sealing connection (not shown) with the outlet 52. The angled lower part 59 runs obliquely upwards towards the space 300, which is delimited by vertical "bulkheads" 7, 8 arranged on each side of a corner region. A second angled part 65 follows at the top of the vertical portion 58 in the corner region 300, which part brings the pipe back towards the middle of the house trailer/camper. Finally, there is a vertical end piece 55, at which a chimney 6 is arranged. The choice of the position of the chimney 6 is at a point of the roof of the house trailer/camper where the roof is essentially plane, implying that a tight securing may be guaranteed.

Further, it is shown that below through the floor 100 of the house trailer/camper there is an opening 31 below the toilet for the provision of an air intake pipe 74, for supply of combustion air to the toilet 2. This air intake is preferably fetched separately from the outside, i.e. not fetched from the air inside the trailer, and is carried in an own, sealed channel to the combustion vessel 34. According to a preferred embodiment, there is a heat generating device 76 at the air intake pipe 74 in order to prevent downdraught via the air intake pipe 74. According to a preferred embodiment, the heat generating device 76 is an annular metal device, which implies good heat conduction, which device has recesses for the provision of heat means 78. In the preferred embodiment, the heat means 78 is a part of an under-floor heating device belonging to the house trailer/ camper, suitably in the form of a hot water loop. Preferably, the heating device 76 has a lower height than the floor 100 and stays in contact upwards towards the underside of the floor surface 3 of the toilet, so that a possibility for an isolated space is created below the heating device 76 in the floor 100.

According to an alternative embodiment (not shown) a traditional radiator is used as a heating device 76 and a larger opening (e.g. rectangular) is used as an air intake device 74, wherein the heating device 76 instead is placed inside the air intake device 74, adapted to the radiator in such a way that the radiator (e.g. a pipe radiator with flanges) almost exactly fits into the opening so that the air is forced to flow across the heating surfaces of the radiator and is hence heated before it is supplied to the combustion chamber 34, e.g. more flexibly to be able to adapt the temperature of the intake air for different types of combustion principles, e.g. to use diesel fuel or electricity instead of gas.

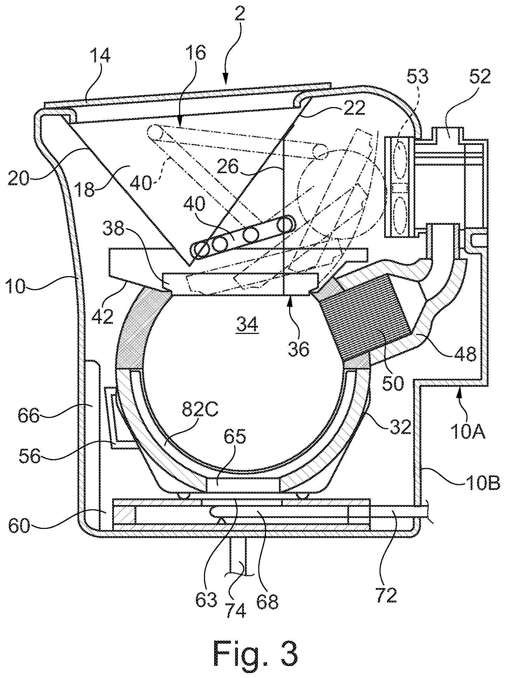

Fig. 3 shows a toilet arrangement 2 in accordance with the principles of the invention, which comprises a housing 10 of any suitable heat-insulating material. The housing has a height which makes it comfortable to sit on the toilet chair. On its upper side a cover 14 is hingably arranged in the back edge of the cover over a first upper opening 16. Below the first, upper opening 16 an upper bowl 18 is arranged to the inside of the upper side of the housing around the edges of the opening 16. The bowl 18 is shaped with inwardly sloping front and back walls which meet along a line, as well as inwardly sloping side walls. The back wall 22 is provided with the part which is hingably turnable around the attachment at a distance up the back wall. The hingable part is also arranged in side walls with the same inclination as the side walls of the upper bowl. A combustion vessel 32 is arranged below the upper bowl 18.

In the combustion vessel 32 there is a combustion chamber 34. The combustion chamber 34 has a substantially spherical shape. The combustion vessel 32 is in two pieces, comprising a lower and an upper part. At the top of the upper part there is a circular, upper, second opening 36. This second opening 36 is provided with a cover 38 which, by means of a sealing ring, closes the combustion chamber 35 in the closing position of the cover. The cover 38 consists of a heat resistant material, preferably ceramics. The combustion vessel 32 with the combustion chamber 34 is located in relation to the upper bowl 18 such that the lower end of the front wall 20 of the upper bowl is arranged above and at the front edge of the upper opening 36 of the combustion chamber 34. A hinge arrangement 40 is arranged at partly the hinged part 26 of the upper bowl 18, partly the cover 38 of the combustion vessel 32. A spillage shelter 42 in the form of a trough with side edges is arranged at the combustion vessel 32 and round its upper opening 36.

A suction pipe 48 extends from the combustion chamber 34 through the wall of the upper part. In the pipe 48 a catalyst 50 is arranged adjacent to the combustion chamber 34. Then, the pipe 48 extends further to flue gas space with an outlet 52 ending upwards through a hexahedron-shaped back part 10A at the back side of the housing. A fan 53 is arranged to blow out flue gases from the combustion chamber 34 through the outlet 52, which is connected to an exhaust pipe 5. The combustion vessel 32 is provided with a handle 56. A base 60 is arranged between the combustion vessel 32 and the bottom of the housing. A gas burner 68 is arranged in the space below an opening 63 in the base 60. Alternatively the gas burner 68 may be arranged in the very opening 63 or extend into the opening. A connection pipe for gas 72 extends to the burner 68. An air pipe 74 allows inflow of air to the gas burner 68. The front of the housing is in its lower part provided with a door 66. The combustion vessel 32 has double walls in at least a lower portion, so that a bowl-shaped space 82 is formed between the inner wall and the outer wall. In the bottom part of the outer wall of the combustion vessel 32 there is a circular opening 65, which is as large as the opening 63 in the base 60 and concentric thereto, when the combustion vessel 32 is in its function position. The space between the inner wall and the outer wall communicates with the opening 65.

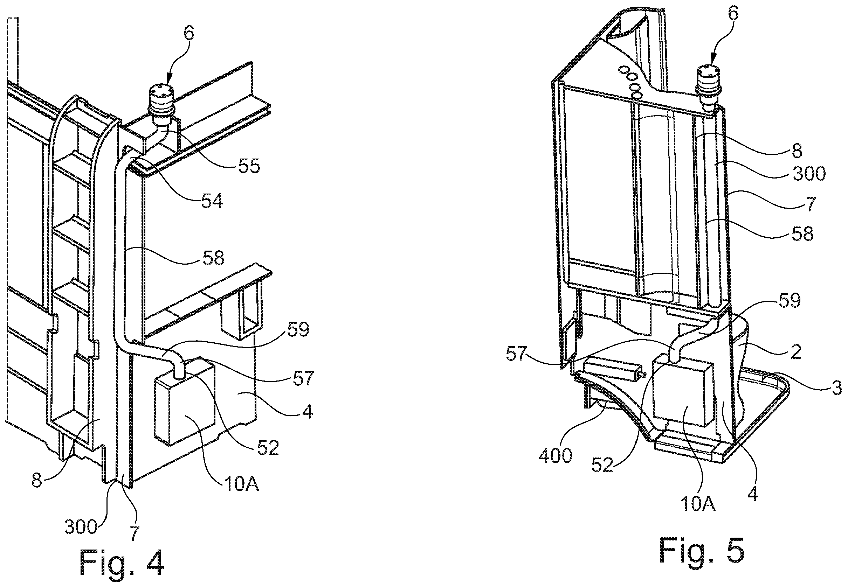

Fig. 4 shows a perspective view, seen obliquely from behind, of the toilet arrangement according to Figs. 1 and 2. Fig. 5 shows an alternative embodiment of a toilet arrangement according to the invention. To an essential extent exactly the same types of parts are used as described according to the previous figures, and therefore they will not be described in detail with reference to this figure. An essential difference according to this embodiment is a different location of the toilet arrangement 1 as a module as compared to the previous figure. According to this embodiment the toilet arrangement 1 is located in a common manner, i.e. more centrally inside the house trailer/camper, in the vicinity of a wheel housing 400. Also in this embodiment you can, according to the invention, derive advantage from having an angled lower pipe portion 57, 59 to allow the vertical portion to run inside a space 300 where heat from the pipe 5 is emitted in order to improve the heat economy and/or comfort.
The invention is not limited to the examples described above but may be varied within the scope of the appending claims. For instance, it is realized that the exhaust pipe 5 may be manufactured of a variety of different materials and still fulfil the basic function according to the invention, but also that it in many applications may be an advantage to use flexible pipe parts, above all those parts which shall interact for a sealed junction and/or those parts which shall be brought into oblique angles. Further, it is understood that in certain applications it would be advantageous to construct the vertical pipe section of a material with good heat conductivity (preferably metal, e.g. stainless steel or aluminium to increase the heat emission) inside the space 300 where the heat emission is especially desirable. A toilet 2 according to the invention emits comparatively much heat, as it takes about 1 hour to achieve total combustion after evacuation, and the temperature at the combustion often is about 500-600°C, which implies that the flue gases in the pipe 5 usually have a temperature well exceeding the environmental air by at least 50°C, which allows effective heat exchange with this environmental air (which may be introduced in the other house trailer space for heating of the room air, and/or be forwarded to positions in the house trailer where local heating is desirable), or a heat medium (e.g. water) is arranged in an own circulation in contact outside the pipe 5, wherein the heat received in said circulation may be used in varying ways (depending on the need given priority to), e.g. in the form of heating water for washing/shower or some form of energy recovery device (e.g. to produce electricity). Further, it is realized that an obvious modification is to allow the outlet pipe 5 to end in one side of the trailer. Another obvious modification is the shape of the box 10A, which may have a varying shape but still fulfil the desired functionality, e.g. a circular cross-sectional shape instead of rectangular.

## Claims

1. A house trailer or camper toilet arrangement, which toilet arrangement (1) comprises a module unit, wherein the module unit comprises:
a floor surface (3) constituting a minor part of a total floor surface of a house trailer/camper,
a wall (4), and
a toilet (2) arranged on top of said floor surface (3) and at said wall (4),
**characterized in that** said toilet (2) consists of a combustion toilet with a combustion vessel (32), and arranged with a back (10b) which is arranged in contact with said wall (4), and a protruding part (10A) protruding from a back side of the toilet and provided with a flue gas outlet (52) arranged at a top side of the protruding part (10A), which protruding part extends through an opening (41) in said wall (4), and wherein the said flue gas outlet (52) is connected to an exhaust pipe (5) ending in a chimney (6) on top of the house trailer/camper or at an outlet opening in a side wall of the house trailer/camper.

2. The toilet arrangement according to claim 1, **characterized in that** said exhaust pipe (5) comprises at least one sloping pipe section (54, 55; 57, 59) for the location of said chimney (6) on an essentially plane part of a roof (200).

3. The toilet arrangement according to claim 2, **characterized in that** said, at least one sloping pipe section (54, 55; 57, 59) is directed such that a substantially vertical portion (58) of said exhaust pipe (5) extends in a space (300) arranged to benefit by the heat emission from said exhaust pipe (5).

4. The toilet arrangement according to claim 3, **characterized in that** said floor surface (3) is arranged in a corner region of said house trailer/camper and that said space (300) constitutes part of a corner of said house trailer/camper, which corner extends vertically.

5. The toilet arrangement according to any of the above claims, **characterized by** an opening (31) through the floor surface (3) with an air intake device (74).

6. The toilet arrangement according to claim 5, **characterized in that** a heating device (76, 78) is arranged at said air intake device (74).

7. The toilet arrangement according to claim 6, **characterized in that** said air intake device is in the form of an air intake pipe (74) extending down below a floor plate (100) of the house trailer/camper and that said heating device (76, 78) comprises a heat conductive object (76) arranged around and in contact with the air intake pipe (74).

8. The toilet arrangement according to claim 6, **characterized in that** said heating device (76, 78) comprises a radiator arranged in a flow path inside said air intake device (74).

9. The toilet arrangement according to claim 7 or 8, **characterized in that** said heating device (78) is connected to other heating system of the house trailer/camper, preferably a waterborne floor heating system.

10. A method at a provision of a house trailer or camper toilet arrangement, which toilet arrangement (1) is arranged to comprise a module unit, wherein the module unit comprises a floor surface (3) constituting a minor part of a total floor surface of a camper/trailer and a wall (4), and the provision of a toilet (2) on top of said floor surface (3) and at said wall (4), **characterized in that** said toilet (2) is arranged in the form of a combustion toilet with a combustion vessel (32), that the toilet (2) is provided with a back (10B) arranged in contact with said wall (4), and that a protruding part (10A) is provided protruding from a rear side of the toilet (2) and provided with a flue gas outlet (52), which protruding part (10A) extends through an opening (41) in said wall (4), wherein the said flue gas outlet (52) is arranged at the top of said protruding part (10A) and is connected to an exhaust pipe (5) ending in a chimney (6) on top of the house trailer/camper.

11. The method according to claim 10, **characterized in that** said exhaust pipe (5) is arranged in heat exchanging contact with a medium to recover energy to the house trailer/camper.

12. The method according to claim 10 or 11, **characterized in that** said exhaust pipe (5) is provided with at least one sloping pipe section (54, 55; 57, 59) for the location of said chimney (6) on an essentially plane part of a roof (200).

## Patentansprüche

1. Wohnwagen- oder Wohnmobiltoilettenanlage, wobei die Toilettenanlage (1) aufweist:
eine Moduleinheit, wobei die Moduleinheit aufweist:
eine Bodenfläche (3), die einen kleineren Teil einer Gesamtbodenfläche eines Wohnwagens/Wohnmobils bildet,
eine Wand (4), und
eine Toilette (2), die auf der Bodenfläche (3) und an der Wand (4) angeordnet ist,
**dadurch gekennzeichnet, dass** die Toilette (2) auf einer Verbrennungstoilette mit einem Verbrennungsbehälter (32) basiert und mit einem Rücken (10B) versehen ist, der in Berührung mit der Wand (4) angeordnet ist, und einen vorragenden Abschnitt (10A) aufweist, der von einer Rückseite der Toilette vorragt und mit einem Abgasauslass (52) versehen ist, der an einer Oberseite des vorragenden Abschnitts (10A) angeordnet ist, wobei sich der vorragende Abschnitt durch eine Öffnung (41) in der Wand (4) erstreckt, und wobei der Abgasauslass (52) mit einem Abgasrohr (5) verbunden ist, das in einem Rauchabzug (6) auf der Oberseite des Wohnwagens/Wohnmobils oder an einer Auslassöffnung in einer Seitenwand des Wohnwagens/Wohnmobils endet.

2. Toilettenanlage nach Anspruch 1, **dadurch gekennzeichnet, dass** das Abgasrohr (5) mindestens einen geneigten Rohrabschnitt (54, 55; 57, 59) für den Ort des Rauchabzugs (6) auf einem im Wesentlichen ebenen Abschnitt eines Dachs (200) aufweist.

3. Toilettenanlage nach Anspruch 2, **dadurch gekennzeichnet, dass** der wenigstens eine geneigte Rohrabschnitt (54, 55; 57, 59) so gerichtet ist, dass sich ein im Wesentlichen vertikaler Abschnitt (58) des Abgasrohrs (5) in einem Raum (300) erstreckt, der ausgelegt ist, um die Wärmeabgabe von dem Abgasrohr (5) zu nutzen.

4. Toilettenanlage nach Anspruch 3, **dadurch gekennzeichnet, dass** die Bodenfläche (3) in einem Eckbereich des Wohnwagens/Wohnmobils angeordnet ist, und dass der Raum (300) ein Bestandteil einer Ecke des Wohnwagens/Wohnmobils ist, wobei sich die Ecke vertikal erstreckt.

5. Toilettenanlage gemäß einem beliebigen der oben erwähnten Ansprüche, **gekennzeichnet durch** eine durch die Bodenfläche (3) hindurch führenden Öffnung (31) mit einer Luftansaugvorrichtung (74).

6. Toilettenanlage nach Anspruch 5, **dadurch gekennzeichnet, dass** eine Heizvorrichtung (76, 78) an der Luftansaugvorrichtung (74) angeordnet ist.

7. Toilettenanlage nach Anspruch 6, **dadurch gekennzeichnet, dass** die Luftansaugvorrichtung in Gestalt eines Luftansaugrohrs (74) vorliegt, das sich nach unten unter einer Bodenplatte (100) des Wohnwagens/Wohnmobils erstreckt, und dass die Heizvorrichtung (76, 78) ein wärmeleitendes Objekt (76) aufweist, das um das Luftansaugrohr (74) angeordnet ist und damit in Berührung steht.

8. Toilettenanlage nach Anspruch 6, **dadurch gekennzeichnet, dass** die Heizvorrichtung (76, 78) einen Strahler aufweist, der in einem Strömungspfad innerhalb der Luftansaugvorrichtung (74) angeordnet ist.

9. Toilettenanlage nach Anspruch 7 oder 8, **dadurch gekennzeichnet, dass** die Heizvorrichtung (78) mit einem sonstigen Heizsystem des Wohnwagens/Wohnmobils, vorzugsweise einem auf Wasser basierenden Bodenheizungssystem, verbunden ist.

10. Verfahren bei einem Vorsehen einer Wohnwagen- oder Wohnmobiltoilettenanlage, wobei die Toilettenanlage (1) dafür ausgelegt ist, eine Moduleinheit aufzuweisen, wobei die Moduleinheit eine Bodenfläche (3), die ein kleinerer Teil einer Gesamtbodenfläche eines Wohnwagens/Wohnmobils ist, und eine Wand (4) aufweist, und das Vorsehen einer Toilette (2) auf der Bodenfläche (3) und an der Wand (4), **dadurch gekennzeichnet, dass** die Toilette (2) in Form einer Verbrennungstoilette mit einem Verbrennungsbehälter (32) ausgelegt ist, dass die Toilette (2) mit einem Rücken (10B) versehen ist, der in Berührung mit der Wand (4) angeordnet ist, und dass ein vorragender Abschnitt (10A) vorgesehen ist, der von einer Rückseite der Toilette (2) vorragt und mit einem Abgasauslass (52) versehen ist, wobei sich der vorragende Abschnitt (10A) durch eine Öffnung (41) in der Wand (4) erstreckt, wobei der Abgasauslass (52) an der Oberseite des vorragenden Abschnitts (10A) angeordnet und mit einem Abgasrohr (5) verbunden ist, das in einem Rauchabzug (6) auf der Oberseite des Wohnwagens/Wohnmobils endet.

11. Verfahren nach Anspruch 10, **dadurch gekennzeichnet, dass** das Abgasrohr (5) in einer wärmeaustauschenden Berührung mit einem Medium angeordnet ist, um Energie für den Wohnwagen/Wohnwagen rückzugewinnen.

12. Verfahren nach Anspruch 10 oder 11, **dadurch gekennzeichnet, dass** das Abgasrohr (5) mit wenigstens einem geneigten Rohrabschnitt (54, 55; 57, 59) für den Ort des Rauchabzugs (6) auf einem im Wesentlichen ebenen Abschnitt eines Dachs (200) versehen ist.

## Revendications

1. Un agencement de toilettes pour une caravane ou un camping-car, lequel agencement de toilettes (1) comprend une unité formant module, l'unité formant module comprenant :
une surface de plancher (3) constituant une partie mineure d'une surface de plancher totale d'une caravane / d'un camping-car,
une paroi (4), et
des toilettes (2) disposés au-dessus de ladite surface de plancher (3) et au niveau de ladite paroi (4),
**caractérisé en ce que** lesdites toilettes (2) consistent en des toilettes à combustion avec un réservoir à combustion (32), et agencées avec un dos (10B) qui est agencé en contact avec ladite paroi (4), et une partie en saillie (10A) faisant saillie depuis un côté arrière des toilettes et muni d'une sortie de gaz de combustion (52) agencée sur un côté supérieur de la partie en saillie (10A), laquelle partie en saillie s'étend à travers une ouverture (41) aménagée dans ladite paroi (4), et ladite sortie de gaz de combustion (52) étant raccordée à un tuyau d'échappement (5) se terminant par une cheminée (6) située sur le sommet de la caravane / du camping-car ou au niveau d'une ouverture de sortie aménagée dans une paroi latérale de la caravane / du camping-car.

2. L'agencement de toilettes selon la revendication 1, **caractérisé en ce que** ledit tuyau d'échappement (5) comprend au moins une portion de tuyau inclinée (54, 55; 57, 59) pour le logement de ladite cheminée (6) sur une partie essentiellement plane d'un toit (200).

3. L'agencement de toilettes selon la revendication 2, **caractérisé en ce que** ladite au moins une portion de tuyau inclinée (54, 55; 57, 59) est dirigée de telle sorte qu'une partie sensiblement verticale (58) dudit tuyau d'échappement (5) s'étend dans un espace (300) agencé pour bénéficier de l'émission de chaleur provenant dudit tuyau d'échappement (5).

4. L'agencement de toilettes selon la revendication 3, **caractérisé en ce que** ladite surface de plancher (3) est agencée dans une zone d'angle de ladite caravane / du camping-car et **en ce que** ledit espace (300) constitue une partie d'un coin de ladite caravane / dudit camping-car, lequel coin s'étend verticalement.

5. L'agencement de toilettes selon l'une quelconque des revendications précédentes, **caractérisé par** une ouverture (31) à travers la surface de plancher (3) avec un dispositif d'admission d'air (74).

6. L'agencement de toilettes selon la revendication 5, **caractérisé en ce qu'**un dispositif de chauffage (76, 78) est agencé au niveau dudit dispositif d'admission d'air (74).

7. L'agencement de toilettes selon la revendication 6, **caractérisé en ce que** ledit dispositif d'admission d'air se présente sous la forme d'un tuyau d'admission d'air (74) descendant sous une plaque de plancher (100) de la caravane / du camping-car et **en ce que** ledit dispositif de chauffage (76, 78) comprend un objet (76) conducteur de chaleur disposé autour du tuyau d'admission d'air (74) et en contact avec celui-ci.

8. L'agencement de toilettes selon la revendication 6, **caractérisé en ce que** ledit dispositif de chauffage (76, 78) comprend un radiateur agencé dans un cheminement d'écoulement situé à l'intérieur dudit dispositif d'admission d'air (74).

9. L'agencement de toilettes selon la revendication 7 ou la revendication 8, **caractérisé en ce que** ledit dispositif de chauffage (78) est relié à un autre système de chauffage de la caravane / du camping-car, de préférence un système de chauffage à eau, par le sol.

10. Un procédé consistant à prévoir un agencement de toilettes pour une caravane ou un camping-car, lequel agencement de toilettes (1) est conçu pour comprendre une unité formant module, l'unité formant module comprenant une surface de plancher (3) constituant une partie mineure d'une surface de plancher totale d'une caravane / d'un camping-car, et une paroi (4), et à prévoir des toilettes (2) sur ladite surface de plancher (3) et au niveau de ladite paroi (4), **caractérisé en ce que** lesdites toilettes (2) sont agencée sous la forme de toilettes à combustion avec un récipient à combustion (32), les toilettes (2) étant conçues avec un dossier (10B) agencé de façon à être en contact avec ladite paroi (4), et une partie en saillie (10A) étant prévue de façon à faire saillie d'un côté arrière des toilettes (2) et étant munie d'une sortie de gaz de combustion (52), laquelle partie en saillie (10A) s'étend à travers une ouverture (41) dans ladite paroi (4), ladite sortie de gaz de combustion (52) étant agencée au sommet de ladite partie en saillie (10A) et étant reliée à un tuyau d'échappement (5) se terminant par une cheminée (6) sur le dessus de la caravane / du camping-car.

11. Le procédé selon la revendication 10, **caractérisé en ce que** ledit tuyau d'échappement (5) est agencé en contact d'échange de chaleur avec un milieu permettant de récupérer l'énergie à destination de la caravane / du camping-car.

12. Le procédé selon la revendication 10 ou la revendication 11, **caractérisé en ce que** ledit tuyau d'échappement (5) est muni d'au moins une portion de tuyau inclinée (54, 55; 57, 59) pour le logement de ladite cheminée (6) sur une partie essentiellement plane d'un toit (200).
